# EUROPEAN PATENT SPECIFICATION

(11) **EP 3 662 434 B1**
(45) Date of publication and mention of the grant of the patent: **09.12.2026**
(21) Application number: 18842145.7
(22) Date of filing: 03.08.2018
(51) Int. Cl.: G06Q 30/00, G06Q 30/02

(54) **SYSTEMS, METHODS AND PROGRAMMED PRODUCTS FOR DYNAMICALLY TRACKING DELIVERY AND PERFORMANCE OF DIGITAL ADVERTISEMENTS IN ELECTRONIC DIGITAL DISPLAYS**
SYSTEME, VERFAHREN UND PROGRAMMIERTE PRODUKTE ZUR DYNAMISCHEN VERFOLGUNG DER BEREITSTELLUNG UND DER LEISTUNG VON DIGITALEN WERBUNGEN AUF ELEKTRONISCHEN DIGITALANZEIGEN
SYSTÈMES, PROCÉDÉS ET PRODUITS PROGRAMMÉS PERMETTANT DE SUIVRE DE MANIÈRE DYNAMIQUE UNE DISTRIBUTION ET DES PERFORMANCES DE PUBLICITÉS NUMÉRIQUES DANS DES AFFICHAGES NUMÉRIQUES ÉLECTRONIQUES

(30) Priority: 04.08.2017 US 201762541313 P
(43) Date of publication of application: 10.06.2020
(73) Proprietor: Place Exchange, Inc., New York, NY 10001 (US)
(72) Inventor: BUCHALTER, Yehuda, Ari, Forest Hills NY 11375 (US); SHARMA, Kshitij, Searingtown NY 11507 (US); SHAO, Jason, Edison, NJ 08817 (US); MASLYN, William, T., Poughkeepsie NY 12603 (US); SHRIRAM, Nitin, Edison NJ 08817 (US)
(74) Representative: Page White Farrer
(86) International application number: PCT/US2018/045251
(87) International publication number: WO 2019/028413

(56) References cited:
- US-A1- 2007 260 736
- US-A1- 2009 217 315
- US-A1- 2011 246 267
- US-A1- 2012 010 956
- US-A1- 2015 046 269
- US-A1- 2015 332 316
- US-A1- 2016 125 466

## Description

### RELATED APPLICATIONS

This application is a non-provisional based on and claiming priority to U.S. Provisional Application No. 62/541,313, filed August 4, 2017 and entitled SYSTEMS, METHODS AND PROGRAMMED PRODUCTS FOR DYNAMICALLY TRACKING DELIVERY AND PERFORMANCE OF DIGITAL ADVERTISEMENTS IN ELECTRONIC DIGITAL DISPLAYS.

### FIELD

The present invention generally relates to systems and methods for dynamically tracking the delivery and performance of digital advertising placed on non-personal devices in physical locations, and integrating, displaying, and reporting impressions and events in conventional digital advertising systems.

### BACKGROUND

A significant and robust market exists for marketing digital advertisements on various types of personal computing devices, like computers (desktop and laptop), mobile phones and tablets, and traditional browser-based devices operated by a consumer who is the user of the device. Conventional advertisement tracking systems and methods which were built for personal devices rely on device identification systems and methods to create a record in buyer advertising systems representing showing a digital advertisement ("ad") to a consumer (the "impression"), and on which personal device a consumer, who was exposed to the impression, took some action (the "event") in response to the impression (e.g., visiting a website, making an online purchase, calling a telephone number in response to the advertisement, to name a few.). In many cases, the impression and event occur on the same personal device, with a unique identifier such as a cookie or device ID serving as the basis for linking the impression and event on that device. In other cases, the impression and event occur on different personal devices that are used by the same consumer (or an associated consumer, like a family member) and linked by a common identifying signal across devices (e.g., a hashed login ID used on both devices) that unified the device-specific identifiers. Thus, conventional tracking systems allow buying parties to automatically track impressions delivered on personal devices (to measure campaign delivery) and link impressions to events occurring on personal devices (to measure campaign performance), for a particular advertisement and campaign.

At the same time, the same or related digital advertisements (e.g., part of the same campaign) may be placed in other network-connected digital display systems (such as the outdoor display 10 illustrated in FIG. 1, as discussed below) which are not personal computing devices ("non-personal devices"). The defining characteristic of personal devices is that they are used by only one individual (or some very small number of individuals, e.g., in a household) who regularly use the device, and therefore digital advertisements shown on these devices are seen only by the individual(s) in question. By contrast, digital advertisements shown on non-personal devices are generally seen by many different people, who have no unique or persistent association with those devices. In addition, with personal devices, the events (such as purchases, etc.) that occur in response to an impression usually occur on the same personal device as the impression, or on another device that can be associated to the same user (or associated users) by the means described above. By contrast, events occurring in response to an impression on a non-personal device usually occur on a different device, and most commonly a personal device (e.g., using a personal device such as a mobile phone to visit a website, scan a QR code, or text a number that is displayed in the advertisement, to name a few). For these reasons, conventional identification and tracking systems and methods (e.g., using cookies and device IDs) to link impressions and events do not work.

These technical differences create technological barriers to using the same integrated methods and systems used in the conventional art to track impressions and events (e.g., so-called ad serving systems, demand-side platforms, etc.) for digital advertisements on personal devices, from being used to track impressions and events for digital advertisements on non-personal devices.

What is needed is an improved system and method by which buyers of digital advertising can place the digital advertisements in both personal devices and non-personal devices, while still allowing dynamic, real-time tracking of the delivery and performance of the digital advertisements as placed in each type of device.

US 2007 260736 discloses a technique for crediting an online publisher when a user uses the online publisher to access an online advertiser. US 2015 332316 discloses receiving user-level data events from a plurality of media platforms, wherein each event relates to at least one online advertisement viewed by a plurality of users. US 2011 246267 discloses attribution of conversion to an impression via a demand side service. US 2016 125466 discloses a sensor detecting when a person is proximal to a device for interactive advertising at a venue, and identifying a characteristic of the person, and causing display of an advertisement targeted at that characteristic. US 2012 010956 discloses for targeting advertising content. US 2015 046269 discloses delivering advertisements to electronic billboards, and social media content relevant to the advertisements. US 2009 217315 discloses detecting presence of individuals in the vicinity of a display and providing targeted media.

### SUMMARY

The present invention addresses this and other problems with new and improved systems and methods for dynamically tracking the delivery and performance of digital advertising placed on non-personal devices in physical locations and integrating, displaying, and reporting impressions and events in traditional digital advertising systems.

There is provided a method according to claim 1.

A described method comprises:
(a) receiving, from a first electronic display at a first location, by a distribution platform, first electronic ad play data comprising a first device identifier associated with the first electronic display and a first time-stamp associated with a first digital advertisement displayed during a first time period at the first electronic display at the first location;
(b) storing, by the distribution platform on first non-volatile computer readable memory operatively connected to the distribution platform, the first electronic ad play data in an impression database stored on the first non-volatile computer readable memory;
(c) determining, by the distribution platform, a first number N of impressions associated with a number of individuals estimated to have viewed the first digital advertisement during the first time period at the first location;
(d) for each of the N impressions, performing by the distribution platform the following steps: [1] obtaining, by the distribution platform, from non-volatile computer readable memory operatively connected to the distribution platform, an impression pixel tag as obtained from a buyer demand side platform associated with the first digital advertisement; [2] generating, by the distribution platform, a virtual session identified by a UID associated with the impression; [3] sending, by the distribution platform to the buyer demand side platform, an impression pixel call containing information associated with the virtual session; [4] receiving, by the distribution platform from the buyer demand side platform, an impression identifier to recognize a device on future calls corresponding to the received impression pixel call; and [5] storing, by the distribution platform, the received impression identifier against the UID as associated with the virtual session;
(e) receiving, at the distribution platform, from a first personal device associated with a first individual responding to the advertisement, a first electronic event;
(f) attributing, by the distribution platform, the first electronic event with a first impression by performing the steps comprising: [1] obtaining, by the distribution platform from non-volatile computer readable memory operatively connected to the distribution platform, an event pixel tag as obtained from the buyer demand side platform associated with the first electronic event; [2] matching the first electronic event with the first digital advertisement by comparing one or more of the following: i) the first electronic event with an identifying code string associated with the first digital advertisement; ii) time of the first electronic event with the first time-stamp associated with the first digital advertisement; iii) location of the first personal device at time of the first electronic event with the first location of the first electronic display; iv) characteristics of the first electronic event and previously recorded impressions using statistical modeling; [3] associating, by the distribution platform, the matched first electronic event with the first impression; [4] obtaining, by the distribution platform, from non-volatile computer readable memory operatively connected to the distribution platform, a corresponding UID and virtual session; and [5] transmitting, by the distribution platform, the event pixel tag with the corresponding stored information from the virtual session, including any impression identifier information previously received from the buyer demand platform, to the buyer demand side platform to record the first electronic event.

In an exemplary embodiment, the determination of the first number N of virtual impressions is performed by the steps comprising:
[1] accessing a geolocation database comprising geolocation data which identifies a number of estimated viewers for a specified location at a specified time of day for a specified day of week as an impression multiplier; and
[2] matching the first ad play data with the impression multiplier to identify the first number N.

In an exemplary embodiment, the determination of the first number N of virtual impressions is performed by the steps comprising:
[1] using sensors to estimate the number of viewers exposed by a specific device at a point in time as an impressions multiplier;
[2] matching the first ad play data with the impression multiplier to identify the first number N.

In an exemplary embodiment, the sensors are associated with one or more of the following: network traffic, cameras, audio and pressure sensors. In the case of pressure sensors, the sensors may detect atmospheric pressure (e.g. displacement), or may be pressure plates (e.g., sensors typically in floors or buried in pavement to detect pressure exerted by objects.

In an exemplary embodiment, the first electronic event is sent via a redirect from a custom URL before the personal device is sent to an advertiser URL.

In an exemplary embodiment, the first electronic event is received from a communication service 80 indicating that a telephone call was made to a call-tracking telephone number associated with the advertisement.

In an exemplary embodiment, the first electronic event is from a communication service 80 indicating receipt by an SMS sent to a number associated with the first electronic advertisement.

In an exemplary embodiment, the first electronic event is from a communication service 80 indicating a social media post with a unique hashtag or other identifying label was made, associated with the first electronic advertisement.

In an exemplary embodiment, the first electronic event is from a computer system indicating an email was received at a unique designated email address, associated with the first electronic advertisement.

In an exemplary embodiment, the first electronic event is from a computer system indicating receipt of a unique coupon code associated with the first electronic advertisement.

In an exemplary embodiment, the first electronic event is from a computer system indicating receipt of a unique QR code associated with the first electronic advertisement.

In an exemplary embodiment, the information associated with the virtual session comprises one or more of the following: a virtual device-id, virtual user-agent, virtual location, virtual IP address, virtual credentials (shared secrets, identifiers, hashes, username/passwords, PKI credentials) and any other information that allows the distribution system to emulate a web browser or mobile device digitally sending tracking information with a buyer digital platform.

In an exemplary embodiment, the impression identifier comprises one or more of the following: cookies returned by buyer digital platform such as: DSP id, campaign id, visit history, displayed ad id, headers, caching control information, API response content, status code, and other information for identification and tracking returned by the buyer digital platform designed to be persisted by a web browser, API client, or other connected device.

In an exemplary embodiment, the buyer demand side platform is associated with one or more external advertiser tags, and for each of the N impressions, the distribution platform repeats steps (d)[1] through (d)[5] mentioned above for each of the one or more external advertiser tags.

### BRIEF DESCRIPTION OF THE DRAWINGS

Exemplary embodiments of the present invention will be described with references to the accompanying figures, wherein:
FIG. 1 illustrates an exemplary environment in accordance with exemplary embodiments of the present invention in which an electronic advertisement is displayed on a network-connected digital display system;
FIG. 2 illustrates an exemplary configuration of participant systems and platforms in accordance with exemplary embodiments of the present invention;
FIGS. 3A, 3B and 3C show front, side and back views of an exemplary electronic display system 10 that can be used in accordance with exemplary embodiments of the present invention.;
FIG. 4 illustrates a conceptual flow in accordance with exemplary embodiments of the present invention;
FIG. 5 illustrates a conceptual system flow of the systems used to convert physical responses into electronic information in accordance with exemplary embodiments of the present invention; and
FIG. 6 illustrates an exemplary user process flow in accordance with exemplary embodiments of the present invention.

### DETAILED DESCRIPTION

The present invention generally relates to systems and methods for dynamically tracking delivery and performance of digital advertising placed on non-personal devices in physical locations and integrating, displaying, and reporting impressions and events in conventional digital advertising systems.

As discussed above, the present invention seeks to address the computer problem of how to track and communicate advertising delivered internet-enabled devices which are not personal devices, and match "impressions" (digital records of the display of an advertisement to an individual) and "events" (consumer actions taken in response to the impressions) on personal devices, in a manner that can be easily integrated into conventional advertising systems (e.g., ad serving systems and demand-side platforms) that currently enable campaign measurement, reporting, attribution, optimization and other functions in cases where impressions and events both occur on personal devices.

In exemplary embodiments, the present invention solves this technical challenge by implementing a physical-to-digital adaptor technology that makes an unconventional and non-routine use of phantom device tracking identifications that allow for dynamic and real-time tracking of impressions delivered to a non-personal device and corresponding events generated from a personal device. In embodiments, the present invention can be implemented in and integrated into conventional digital advertising systems without requiring such systems to be modified. Despite a long-felt need to correlate impressions on a non-personal device with events on a personal device, to date, such a solution has not been realized.

In accordance with exemplary embodiments of the present invention, a distribution platform 30 (as illustrated in FIG. 2 for example), automatically logs "ad plays" (e.g., advertisements shown to consumers on non-personal devices), and events (from personal devices) and translates them to impressions and events that match the interfaces used in conventional digital advertising.

In accordance with exemplary embodiments of the present invention, the distribution system can perform one or more of the following functions:
1. Automatically associate advertising delivered on non-personal devices and consumer responses on personal devices to advertising campaigns set up in traditional digital advertising systems, registering corresponding impression and event tracking endpoints.
2. Expose an Application Programming Interface "API" to digitally record advertising plays, defined as instances of a digital advertisement appearing on a non-personal device (which may be seen by multiple consumers).
3. Automatically translate plays into impressions to infer the number of consumers who were exposed to an individual ad play. The algorithm for estimating impressions may factor in data from measurement companies (e.g., GeoPath, Root, Neustar, to name a few), network traffic, location signals of nearby personal devices, computer vision analysis of camera feeds, data from beacons, other inputs from onboard sensors, or other sources.
4. Create a virtual session, and unique session identifier (UID) for each of these recorded impressions.
5. Emulate a web browser or mobile client to create proxy requests to record impressions in digital advertising systems, recording cookies, headers, and other technical identifiers returned via HTTP responses and persisting them to records associated with the created virtual session into non-volatile memory on a distribution platform (such as the distribution platform 30 shown in FIGS. 2 and 4-6, to be discussed in detail below).
6. Expose an Application Programming Interface "API" to digitally record events using special-built adapters across a variety of communication channels through which consumers may respond on a personal device to an advertisement on non-personal device: e.g., webpage visits, text messages, emails, social media posts, scanning quick response codes, phone calls, to name a few.
7. Associate received events with a previously created virtual session using a variety of heuristics: e.g., device graph correlation, geospatial proximity, predictive modeling, to name a few.
8. Emulate a web browser to create proxy requests to record "events" in digital advertising systems, replaying cookies and other stored information from the virtual session to allow the digital advertising systems to attribute events using systems and methods for web-based advertising on personal devices.
These and other functions are described in further detail below.

FIG. 1 illustrates an exemplary environment in accordance with the exemplary embodiments of the present invention in which a digital advertisement is displayed on a network-connected electronic display system 10. As shown, network-connected electronic display 10 is a non-personal device.

In practice, a digital advertisement is displayed on a monitor 12 of the electronic display system 10. During the time the digital advertisement is displayed, various individuals 20-1 ... 20-n may be passing by the electronic display system 10 within viewing distance. Each individual 20-1 ... 20-n may possess one or more personal devices 22-1 ... 22-n, such as mobile phones, tablets, computers, to name a few, through which such individual may respond to the advertisement being displayed. In exemplary embodiments, the advertisement can include a unique response channel, such as a coupon code, a QR code, unique URL address, a unique call-tracking telephone number, a unique SMS short code, a unique social media hashtag, a unique email address, to name a few, by which the advertiser can determine if the response by an individual 20-1 ... 20-n is attributable to an advertisement associated with the electronic display system 10 and/or the network associated with the electronic display system 10.

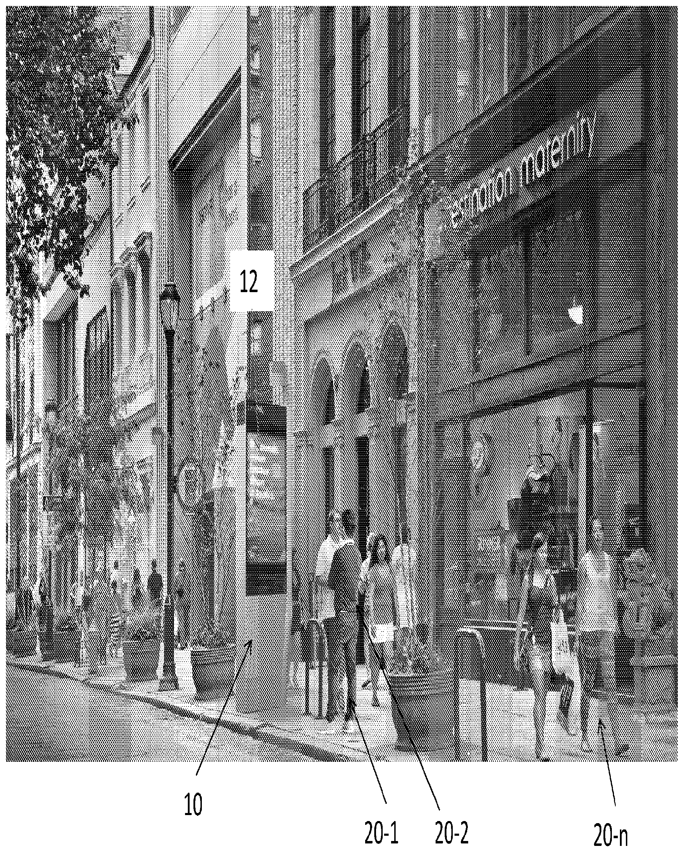

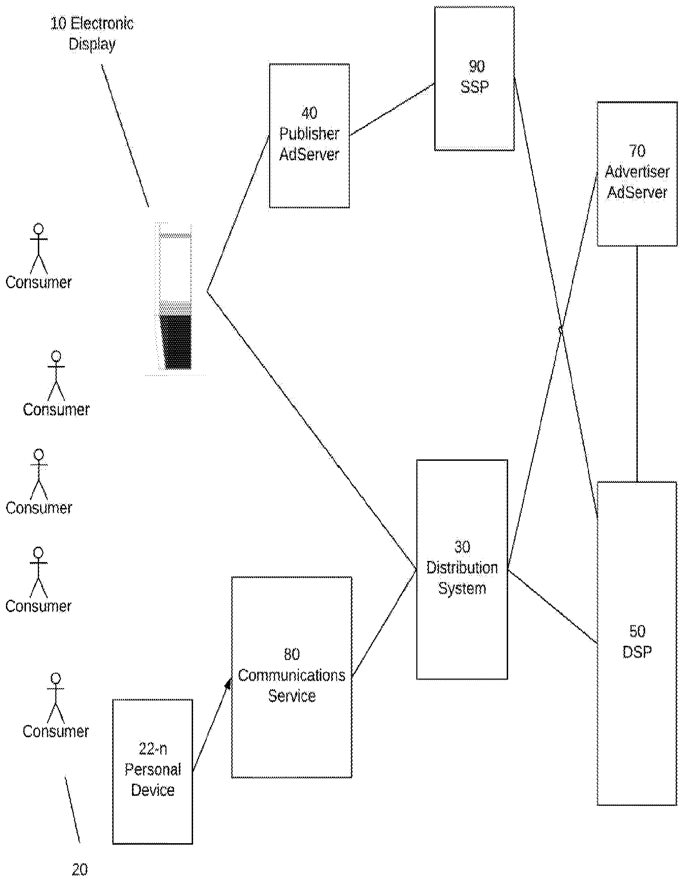

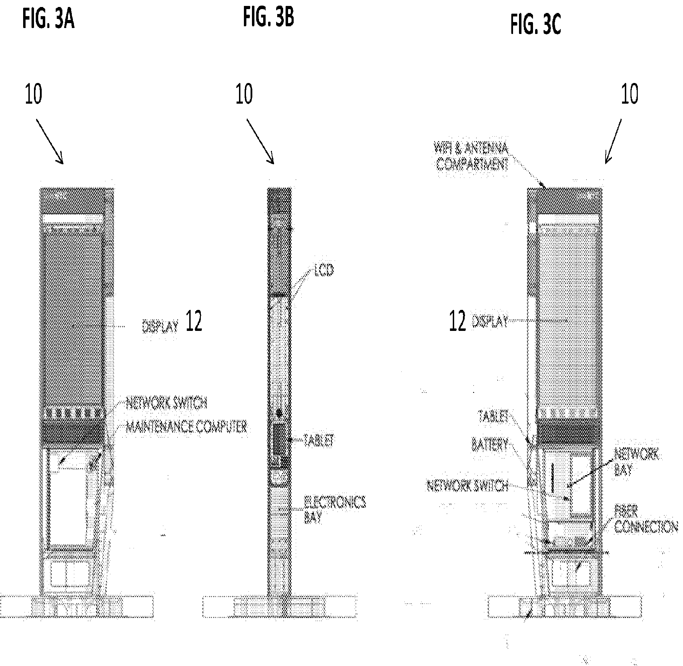

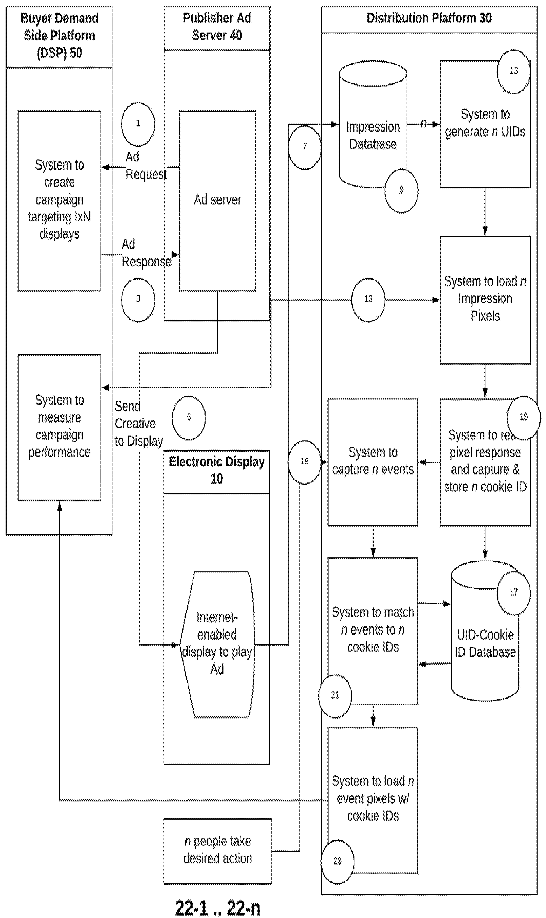

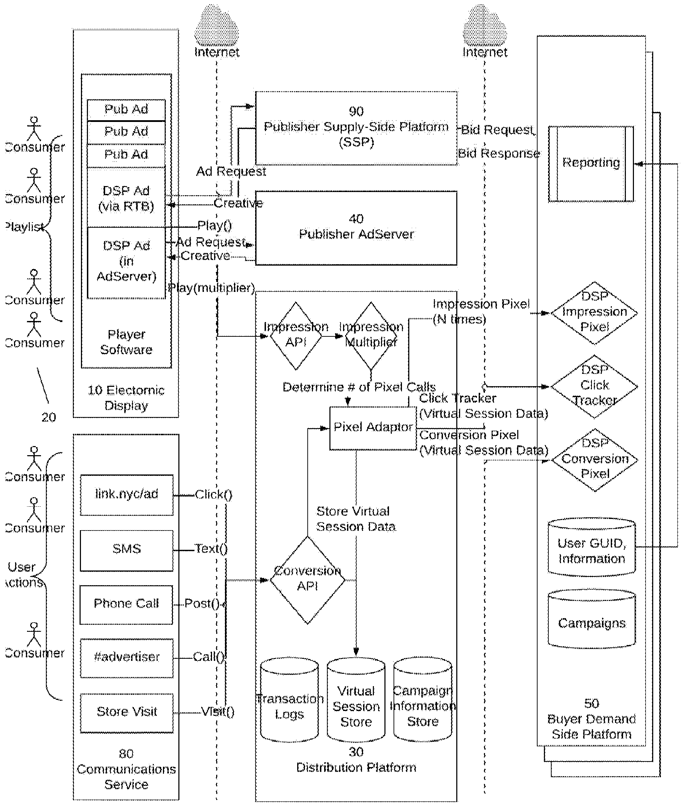

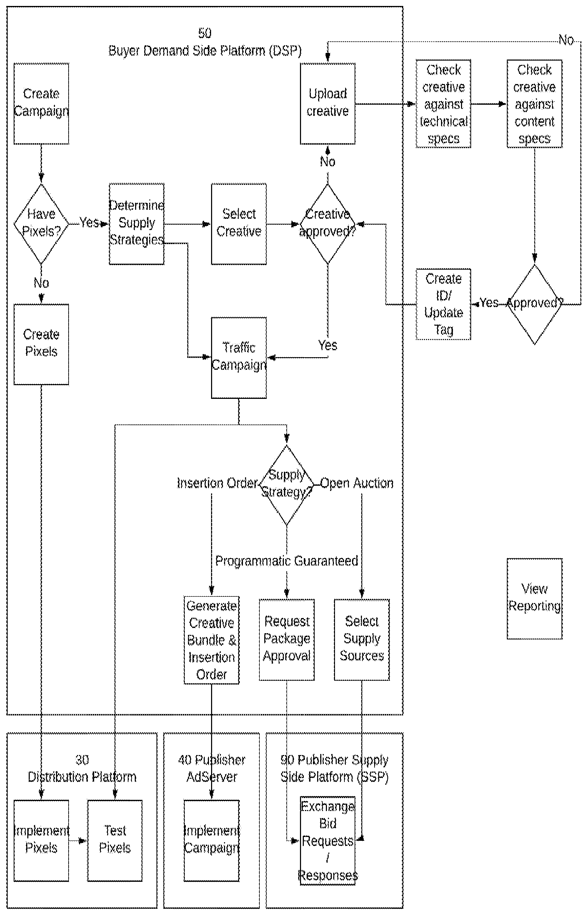

While FIGS. 1 and 3 (discussed below) illustrate an electronic display device 10 which is an outdoor display known as LinkNYC^{®}, other non-personal network-connected electronic devices and displays can also be used in accordance with exemplary embodiments of the present invention. For example, network-connected screens placed in subway stations, building lobbies, elevators, on the exterior of motor vehicles, on seatbacks located in public transportation, retail kiosks, interactive displays, digital street signs, digital map/wayfinding displays, to name a few.

FIG. 2 illustrates an exemplary configuration of participant systems and platforms in accordance with exemplary embodiments of the present invention. It will be appreciated that each of the devices, systems and platforms illustrated in FIG. 2 are represented as a single unit, but may be comprised of one or more units consistent with embodiments of the present invention.

As illustrated in FIG. 2, one or more network-connected electronic display systems 10 may be connected via a network connection (such as the Internet) to distribution platform 30. Distribution platform 30 is, in turn, connected either directly or through a network connection (such as the Internet) to publisher ad server 40, which in turn is connected either directly or through a network connection (such as the Internet) to buyer demand side platform 50 (or DSP 50). In accordance with the exemplary embodiments, digital advertisements may be placed by advertisers using DSP 50 through publisher ad server 40 to be recorded via distribution platform 30 when displayed on electronic display system 10.

At any given period in time, an individual 20-1 ... 20-n, who may possess one or more personal devices 22-1 ... 22-n, such as mobile phones, tablets, computers, to name a few, may respond to a given digital advertisement being displayed on electronic display system 10.

In accordance with exemplary embodiments, events may be tracked by using an electronic action item, such as a coupon code, a QR code, unique URL address, a unique call-tracking telephone number, a unique SMS short code, a unique social media hashtag, a unique email address, to name a few.

In accordance with exemplary embodiments of the present invention, events can be tracked by displaying a unique quick response (QR) code in the digital advertisement and then having the communication service 80 provide the distribution platform 30 with tracking information each time the QR code is scanned and transformed by the consumer's personal device software into a web request, and collecting request information to help associate the event with a virtual session using attributes like: URL requested, requested IP address, cookies, user-agent, location of request, time of request, source network, or other meta data attached to the web request. The distribution platform 30 will then associate the request with a virtual session, and then emulate a browser making an event request to the buyer demand side platform 50 using the virtual session information as parameters or meta-data on the request

In accordance with exemplary embodiments of the present invention, events can be tracked by displaying a unique coupon code in the digital advertisement and then having the communication service 80 provide the distribution platform 30 with tracking information each time the code is submitted to a website, emailed for a transaction, postal mailed, provided on a phone call, entered into an e-commerce transaction, provided during a retail transaction, or other redemption, to name a few. The distribution platform 30 will then associate the request with a virtual session, and then emulate a browser making an event request to the buyer demand side platform 50 using the virtual session information as parameters or meta-data on the request.

In accordance with exemplary embodiments of the present invention, events can be tracked by displaying in the digital advertisement a custom URL, which can track and redirect the personal device to an advertiser URL. In such an embodiment, the process of redirecting from a human-readable short format (e.g. link.nyc/advertiser) can be used to determine the event was triggered, and collect request information to help associate the event with a virtual session. The distribution platform 30 will then associate the request with a virtual session, and then emulate a browser making an event request to the buyer demand side platform 50 using the virtual session information as parameters or meta-data on the request.

In accordance with exemplary embodiments of the present invention, events can be tracked by displaying a unique call-tracking telephone number in the digital advertisement and then having a communications service 80 provide the distribution platform 30 with tracking information each time a call is received at the call-tracking telephone number.

In accordance with exemplary embodiments of the present invention, events can be tracked by displaying a unique SMS short code in the digital advertisement and then having the communication service 80 provide the distribution platform 30 with tracking information each time an SMS message is received using the short code associated with the digital advertisement. In embodiments, other forms of messaging such as MMS, or messenger apps can be used in lieu of SMS message.

In accordance with exemplary embodiments of the present invention, events can be tracked by displaying a unique social media hashtag (e.g., #Intersection) in the digital advertisement and then having the communication service 80 provide the distribution platform 30 with tracking information each time the hashtag is posted in social media. Exemplary social media systems can include Facebook, Instagram, Twitter, LinkedIn, to name a few.

In accordance with exemplary embodiments of the present invention, events can be tracked by displaying a unique email address in the digital advertisement and then having the communication service 80 provide the distribution platform 30 with tracking information each time such email address receives an email associated with the digital advertisement.

**In** accordance with exemplary embodiments of the present invention, events can be tracked using other information displayed in the advertisement that can be used to link the event to the impression.

FIGs. 3A, 3B and 3C show front, side and back views, respectively, of an exemplary electronic display system 10 that can be used in accordance with exemplary embodiments of the present invention. As illustrated in FIGs. 3A-3C, electronic display 10 includes a display 12 on which the digital advertisement may be displayed. The electronic display 10 may also include a network connection, such as network switch and fiber connection as shown in FIG. 3C, by way of example. Other types of network connections such as cellular modem using GPRS, EDGE, 3G, 4G LTE, low power LTE, Ethernet, token-ring, Wi-Fi, WiMAX, Bluetooth, ZigBee, fixed-point wireless, mesh networks, or other data transmission technologies may also be used in accordance with exemplary embodiments of the present invention.

**In** embodiments, such as LinkNYC^{®}, the electronic display 10 may offer other features such as an interactive screen, Wi-Fi or other wireless connections, electronic power, location "beacons" or information tagging, phone calling, emergency service access, display of non-advertising targeted information, video recording, audio recording, environmental condition recording to name a few. In embodiments where the electronic display 10 includes a tablet or other consumer-operated interactive capability, an event can be tracked and linked to an impression when the consumer responds via the tablet and a message is sent from the tablet to the distribution platform 30 registering the event.

FIG. 4 illustrates a conceptual flow in accordance with exemplary embodiments of the present invention. In particular, FIG. 4 illustrates an exemplary process flow in accordance with exemplary embodiments of the present invention, involving buyer demand side platform 50, publisher ad server 40, electronic display(s) 10, distribution platform 30, and event transactions such as request from personal devices 22-1 ... 22-n. Exemplary interaction among these devices will now be discussed.

In accordance with exemplary embodiments of the present invention, the process begins with a publisher ad server 40 and buyer demand side platform 50 receiving a request for an advertisement from one or more electronic displays 10 associated with an electronic display owner (Step S1 in FIG. 4). For purposes of illustration, the process will be described assuming a single electronic display 10, but it can be readily appreciated by those skilled in the art, that the same process may work with the same digital advertisement or corresponding digital advertisements being displayed on a plurality of electronic displays 10 associated with the same owner or operator. Similarly, while a single publisher ad server 40 and single DSP 50 is illustrated, it will be appreciated that multiple such servers could participate consistent with exemplary embodiments of the present invention.

An example of such advertisement placement process consistent with exemplary embodiments of the present invention can be initiated with a publisher ad server 40 hosted on an internet-connected server or cloud computing cluster uses a provided API to electronically send a bid request from a supply side platform (such as SSP 90 shown in FIGS. 5 and 6) to a buyer demand side platform 50 informing of the availability of an advertisement display opportunity on electronic display 10, and the buyer demand side platform 50 responding with a first digital advertisement (Step S3 in FIG. 4). Such a request will typically include information to allow a buying platform (such as DSP 50) to make a decision about which if any campaign it may wish to return with an electronic communication including, for example: purchase conditions (e.g. fixed pricing, auction-based pricing, exclusive availability) applicability of pre-negotiated terms or conditions "deals", time of display, location and/or orientation of device, categorization of device, resolution and orientation of display device, characteristics of the device's surrounding environment ("context") such as nearby points of interest, historical observations about the types of individuals ("audiences"), restrictions on content display, preferred language, to name a few. It will be appreciated by those skilled in the art that this process could be bilateral, asynchronous, and may be initiated by either the buyer demand side platform 50 or the publisher ad server 40 using either a single, or potentially multiple rounds of message exchange to arrive at a final advertising placement, in accordance with exemplary embodiments of the present invention. Once the campaign is electronically determined by the buyer demand side platform 50 and the publisher ad server 70, a digital advertisement is sent to electronic display 10 to be delivered in a defined time period (e.g., "first time period") (Step S5 in FIG. ). This digital advertisement may include images, videos or other user-visible content, as well as meta-data related to the advertisement, such as, by way of example: tracking API endpoints for relaying recorded impressions and events, restrictions governing the display of content, identifiers for the content, campaign, advertiser, and/or other related information, to name a few (collectively, "creative metadata"). The digital advertisement will include an electronic action item to be displayed to allow events associated with such advertisement to be tracked as discussed in greater detail below. Examples of such electronic action item may include a coupon code, a QR code, unique URL address, a unique call-tracking telephone number, a unique SMS short code, a unique social media hashtag, a unique email address, to name a few.

In accordance with the "creative metadata" the digital advertisement is displayed at the electronic display 10, for the defined time period (e.g., date or day of week and time of day0, defined frequency (e.g., 15 second intervals every 2 minutes, defined location (e.g., device 10 and 34th Street and Broadway in New York City), defined contextual criteria (e.g. device located > 300ft from a school) for requested device (e.g., electronic display device with specific device id), to name a few.

Another example of such advertisement placement process in accordance with exemplary embodiments of the present invention involves initiation via electronically recording in the distribution platform 30 the criteria governing the display of an advertisement provided for future evaluation by the buying platform. Data points provided ("targeting") may include, by way of example: applicable timeframe, selected location, specific characteristics about the type of people to expose to advertising ("targeting"), budget, and how quickly to spend budget, to name a few. In this scenario, the DSP 50 does not directly make a decision for individual requests, but provides the information used to make that decision which is delegated to the publisher ad server 40 for specific determination to be made at a future date. The process of display once that decision is made would be identical to the previously described process, and this digital campaign information would include images, videos or other user-visible content, as well as meta-data related to the advertisement such as, by way of example: tracking API endpoints for relaying recorded impressions and events, restrictions governing the display of content, identifiers for the content, campaign, advertiser, and/or other related information, to name a few (collectively, "creative metadata") which would be used in the same manner as above to facilitate the electronic display of content.

With reference to the figures, a method in accordance with an exemplary embodiment of the present invention includes receiving, from a first electronic display 10 at a first location, by a distribution platform 30, first electronic ad play data comprising a first device identifier associated with the first electronic display10 and a first time-stamp associated with a first digital advertisement displayed during a first time period at the first electronic display at the first location *(e.g.,* Step S7 in FIG. 4). The distribution platform 30 stores on first non-volatile computer readable memory operatively connected to the distribution platform 30, the first electronic ad play data in an impression database (e.g., the "impression database" shown in FIG. 4, as shown at Step S9 in FIG. 4) stored on the first non-volatile computer readable memory. The distribution platform 30 determines a first number N of impressions associated with a number of individuals estimated to have viewed the first digital advertisement during the first time period at the first location (e.g., Step S11 in FIG. 4). For each of the N impressions, the distribution platform 30 performs the following steps: [1] obtaining, from non-volatile computer readable memory operatively connected to the distribution platform, an impression pixel tag as obtained from a buyer demand side platform 50 associated with the first digital advertisement (*e.g.,* Step S13 in FIG. 4); [2] generating a virtual session identified by a UID associated with the impression; [3] sending, to the buyer demand side platform 50, an impression pixel call containing information associated with the virtual session; [4] receiving, from the buyer demand side platform 50, an impression identifier to recognize a device on future calls corresponding to the received impression pixel call (*e.g.,* Step S15 in FIG. 4); and [5] storing the received impression identifier against the UID as associated with the virtual session (e.g., Step S17 in FIG. 4).

In an accordance with an exemplary embodiment, a first electronic event may be received at the distribution platform from a first personal device 22-n associated with a first individual responding to the advertisement (e.g., Step S19 in FIG. 4). The distribution platform 30 may attribute the first electronic event with a first impression by performing the following steps: [1] obtaining, from non-volatile computer readable memory operatively connected to the distribution platform, an event pixel tag as obtained from the buyer demand side platform 50 associated with the first electronic event; [2] matching the first electronic event with the first digital advertisement by comparing one or more of the following (e.g., Step S21 in FIG. 4): i) the first electronic event with an identifying code string associated with the first digital advertisement; ii) time of the first electronic event with the first time-stamp associated with the first digital advertisement; iii) location of the first personal device at time of the first electronic event with the first location of the first electronic display; iv) characteristics of the first electronic event and previously recorded impressions using statistical modeling. The distribution platform 30 then associates the matched first electronic event with the first impression, obtains, from non-volatile computer readable memory operatively connected to the distribution platform, a corresponding UID and virtual session, and transmits the event pixel tag with the corresponding stored information from the virtual session, including any impression identifier information previously received from the buyer demand platform, to the buyer demand side platform to record the first electronic event (e.g., Step S23 in FIG. 4).

The determination of the first number N of virtual impressions may be performed by accessing a geolocation database comprising geolocation data which identifies a number of estimated viewers for a specified location at a specified time of day for a specified day of week as an impression multiplier. The first ad play data may then be matched with the impression multiplier to identify the N number of impressions.

Alternatively, the determination of the first number N of virtual impressions may be performed by using sensors to estimate the number of viewers exposed by a specific device at a point in time as an impressions multiplier. The sensors may be associated with one or more of the following: network traffic, cameras, audio and pressure, as discussed above.

The first electronic event may be sent via a redirect from a custom URL before the personal device is sent to an advertiser URL.

The first electronic event may be received from a communication service indicating that a telephone call was made to a call-tracking telephone number associated with the advertisement.

The first electronic event may be from a communication service indicating receipt by an SMS sent to a number associated with the first electronic advertisement.

The first electronic event may be from a communication service indicating a social media post with a unique hashtag or other identifying label was made, associated with the first electronic advertisement.

The first electronic event may be from a computer system indicating an email was received at a unique designated email address, associated with the first electronic advertisement.

The first electronic event may be from a computer system indicating receipt of a unique coupon code associated with the first electronic advertisement.

The first electronic event may be from a computer system indicating receipt of a unique QR code associated with the first electronic advertisement.

The information associated with the virtual session may include one or more of the following: a virtual device-id, virtual user-agent, virtual location, virtual IP address, virtual credentials (shared secrets, identifiers, hashes, username/passwords, PKI credentials) and any other information that allows the distribution system to emulate a web browser or mobile device digitally sending tracking information with a buyer digital platform.

The impression identifier may include one or more of the following: cookies returned by buyer digital platform such as: DSP id, campaign id, visit history, displayed ad id, headers, caching control information, API response content, status code, and other information for identification and tracking returned by the buyer digital platform designed to be persisted by a web browser, API client, or other connected device.

The buyer demand side platform may be associated with one or more external advertiser tags, and for each of the N impressions, the distribution platform repeats steps d)[1] through d)[5] for each of the one or more external advertiser tags.

FIG. illustrates a conceptual flow of the systems used to convert physical responses into electronic information in accordance with exemplary embodiments of the present invention.

Referring to FIG. 5, a digital advertisement ("ad") is scheduled in the electronic playlist on the electronic display 10 via either a pre-arranged campaign, or a real-time bidding (RTB) integration.

This ad, when played sends an electronic signal to the distribution platform 30 - indicating the ad was played, and providing an "impression multiplier" estimating how many consumers (N number of consumers) were exposed to the ad.

The distribution platform 30 uses this information to determine how many impression records to create in the buyer demand side platform 50.

The distribution platform 30 creates a virtual session for each impression record. Then, mimicking a web browser, the distribution platform 30 issues a call to the buyer demand side platform 50 registering the impression, and receiving and recording any impression identifier information (cookies, headers, etc.) received into the virtual session from the buyer demand side platform 50.

Upon a user triggering an event via a number of communication channels 80, integration software is called which conveys the information into the distribution platform's 30 conversion API.

The distribution platform 30 uses an algorithm to use this information (such as personal device information, location, time, transaction identifiers like coupon codes, to name a few) and probabilistic modelling to associate the event with a previously recorded virtual session.

Using the information retrieved from the virtual session, the distribution platform 30 mimics a web browser, issuing a call to the buyer demand side platform 50 registering the conversion, replaying any stored impression identifier information (cookies, headers, to name a few) received into the virtual session.

This exemplary process allows the representation of both impressions on non-personal devices, and events to be recorded by the buyer demand side platform 50 in a way that enables electronic reporting designed for traditional advertising to reflect impressions and events mapping to non-personal device plays and consumer actions.

FIG. 6 illustrates an exemplary process flow in accordance with exemplary embodiments of the present invention.

Referring to FIG. 6, an advertising campaign is created at a buyer demand side platform 50. "Pixels" are then created at the demand side platform 50 which include computer code or API endpoint calls to track events that occur.

The pixels are sent to the distribution platform 30, where the pixels are entered after testing their implementation.

A creative asset (image, video, and/or some user-visible message format) is then selected for display in the advertising.

In embodiments, when a creative has not been previously approved, the creative may be uploaded into the buyer demand-side platform 50, where it may be reviewed for approval to be displayed on a electronic display 10.

In embodiments, advertiser may then determine a supply strategy and under what type of terms to purchase advertising inventory, which may then be electronically communicated. Examples of such terms, may include for example: pre-negotiated, implemented by executing in the electronic display owners ad server, pre-negotiated with individual transactions electronically exchanged via programmatic integration, non-guaranteed executing in real-time auctions over via programmatic integration, and/or another purchasing strategy, to name a few.

During and after the campaign has run, reporting provided by the demand-side platform 50, representing information collected by the demand-side platform from ad impressions and events, may be monitored.

### EXAMPLES

The following examples of potential uses cases are for illustration purposes and not intended to be limiting.

EXAMPLE 1: Advertising on Interactive Kiosks - when advertising is displayed on an interactive kiosk (serving as the electronic display) the kiosk software, ad sever, or advertising unit initiates the process of communicating with the distribution platform to allow for tracking of advertising in buyer demand systems.

EXAMPLE 2: Advertising on Digital Billboards - when advertising is displayed on an digital billboard (serving as the electronic display) the content player software, ad server, or advertising unit initiates the process of communicating with the distribution platform to allow for tracking of advertising in buyer demand systems.

EXAMPLE 3: Advertising on Digital Signage - when advertising is displayed on an connected device used for the display of signage or information (serving as the electronic display) the content player software, ad server, or advertising unit initiates the process of communicating with the distribution platform to allow for tracking of advertising in buyer demand systems.

EXAMPLE 4: Advertising in automated retail machines (including vending machines) - when advertising is displayed on an automated retail information or transaction system (serving as the electronic display) the system software, ad server, or advertising unit initiates the process of communicating with the distribution platform to allow for tracking of advertising in buyer demand systems.

EXAMPLE 5: Advertising on ATMs- when advertising is displayed on an ATM (serving as the electronic display) the system software, ad server, or advertising unit initiates the process of communicating with the distribution platform to allow for tracking of advertising in buyer demand systems.

EXAMPLE 6: Cross-media advertising on campaigns spanning multiple channels - when advertising is delivered via multiple conventional digital media system (serving as the electronic display) the conventional digital media system software, ad server, or advertising unit initiates the process of communicating with the distribution platform to allow for the additional tracking of events on separate personal devices in buyer demand systems consistent with above usages.

EXAMPLE 7: Advertising on digital displays in public building spaces (e.g. lobbies, reception of commercial or residential buildings) - when advertising is displayed on a public or semi-public display in a common building or outdoor area (serving as the electronic display) the system software, ad server, or advertising unit initiates the process of communicating with the distribution platform to allow for tracking of advertising in buyer demand systems. Such advertising may take place at transportation hubs or facilities, such as, for example, airports, train stations, train platforms, bus stations and taxi stands, to name a few. It should be appreciated that such advertising on non-personal devices may take place at any other type of public building space, such as, for example, gyms, bars, movie theaters, restaurants, grocery stores, departments stores, malls, convenience stores and gas stations, to name a few.

EXAMPLE 8: Advertising in elevators - when advertising is displayed on a connected display in an elevator (serving as the electronic display) the system software, ad server, or advertising unit initiates the process of communicating with the distribution platform to allow for tracking of advertising in buyer demand systems.

EXAMPLE 9: Advertising in non-personal vehicles: buses, taxis, ferries, trains, subways, airplanes- when advertising is displayed on screen located inside a vehicle for passengers, or on the outside of a vehicle for passers-by (serving as the electronic display) the system software, ad server, or advertising unit initiates the process of communicating with the distribution platform to allow for tracking of advertising in buyer demand systems.

EXAMPLE 10: Advertising in retail checkout lines - when advertising is displayed on a connected display in a retail environment during the checkout process (serving as the electronic display) the system software, ad server, or advertising unit initiates the process of communicating with the distribution platform to allow for tracking of advertising in buyer demand systems.

## Claims

1. A method for dynamically tracking the delivery and performance of digital advertising placed on non-personal devices, the method comprising:
a) receiving (7), from a first non-personal electronic display at a first public or semi-public location, the first non-personal electronic display not having an association with a first individual by a distribution platform (30), first electronic advertisement play data comprising a first device identifier associated with the first non-personal electronic display and a first time-stamp associated with a first digital advertisement displayed during a first time period at the first non-personal electronic display at the first public or semi-public location;
b) storing (9), by the distribution platform (30) on first non-volatile computer readable memory operatively connected to the distribution platform (30), the first electronic advertisement play data in an impression database stored on the first non-volatile computer readable memory;
c) determining (11), by the distribution platform (30), a first number N of impressions associated with a number of individuals estimated to have viewed the first digital advertisement during the first time period at the first public or semi-public location,
wherein the determination of the first number N of virtual impressions is performed by the steps comprising:
1] accessing a geolocation database comprising geolocation data which identifies a number of estimated viewers for a specified location at a specified time of day for a specified day of week as an impression multiplier; and
2] matching the first ad play data with the impression multiplier to identify the first number N;
or
1] using sensors to estimate the number of viewers exposed by a specific device at a point in time as an impressions multiplier; and
2] matching the first ad play data with the impression multiplier to identify the first number N;
d) for each of the N impressions, performing by the distribution platform (30) the following steps:
1] obtaining (13), by the distribution platform (30), from non-volatile computer readable memory operatively connected to the distribution platform (30), an impression pixel tag as obtained from a buyer demand side platform (50) associated with the first digital advertisement;
2] generating, by the distribution platform (30), a virtual session identified by a unique session identifier, UID, associated with the impression;
3] associating, by the distribution platform (30), information with the virtual session, wherein the information allows the distribution platform (30) to emulate a web browser or mobile device, wherein emulating a web browser or mobile device comprises digitally transmitting a proxy request including tracking information to the buyer demand side platform (50);
4] sending, by the distribution platform (30) to the buyer demand side platform (50), an impression pixel call containing the information associated with the virtual session;
5] receiving (15), by the distribution platform (30) from the buyer demand side platform (50) in response to the buyer demand side platform (50) receiving the impression pixel call, an impression identifier to recognize a device on future calls corresponding to the received impression pixel call; and
6] storing (17), by the distribution platform (30), the received impression identifier against the UID as associated with the virtual session;
e) receiving (19), at the distribution platform (30), from a first personal device associated with the first individual responding to the advertisement a first electronic event, wherein step e) comprises at least one of the following steps:
1] receiving the first electronic event via a redirect from a custom URL before the personal device is sent to an advertiser URL;
2] receiving the first electronic event from a communication service indicating that a telephone call was made to a call-tracking telephone number associated with the advertisement;
3] receiving the first electronic event from a communication service indicating receipt by an SMS sent to a number associated with the first electronic advertisement;
4] receiving the first electronic event from a communication service indicating a social media post with a unique hashtag or other identifying label was made, associated with the first electronic advertisement;
5] receiving the first electronic event from a computer system indicating an email was received at a unique designated email address, associated with the first electronic advertisement;
6] receiving the first electronic event from a computer system indicating receipt of a unique coupon code associated with the first electronic advertisement;
7] receiving the first electronic event from a computer system indicating receipt of a unique QR code associated with the first electronic advertisement;
f) attributing, by the distribution platform (30) for the buyer demand side platform (50), the first electronic event with a first impression by performing the steps comprising:
1] obtaining, by the distribution platform (30) from non-volatile computer readable memory operatively connected to the distribution platform(30), an event pixel tag as obtained from the buyer demand side platform (50) associated with the first electronic event;
2] matching (21) the first electronic event with the first digital advertisement by comparing one or more of the following:
i) the first electronic event with an identifying code string associated with the first digital advertisement;
ii) time of the first electronic event with the first time-stamp associated with the first digital advertisement;
iii) location of the first personal device at time of the first electronic event with the first public or semi-public location of the first non-personal electronic display;
iv) characteristics of the first electronic event and previously recorded impressions using statistical modeling;
3] associating, by the distribution platform (30), the matched first electronic event with the first impression;
4] obtaining, by the distribution platform (30), from non-volatile computer readable memory operatively connected to the distribution platform (30), a corresponding UID and virtual session; and
5] transmitting, by the distribution platform (30), a proxy request including the event pixel tag and the corresponding stored information associated with the virtual session, and including any impression identifier information previously received from the buyer demand side platform (50), to the buyer demand side platform (50) to record the first electronic event for measuring campaign performance.

2. The method of claim 1, wherein the sensors are associated with one or more of the following: network traffic, cameras, audio and pressure.

3. The method of claim 1, wherein in step d)3], the information associated with the virtual session comprises one or more of the following: a virtual device-id, virtual user-agent, virtual location, virtual IP address, virtual credentials (shared secrets, identifiers, hashes, username/passwords, PKI credentials).

4. The method of claim 1, wherein in step d)4], the impression identifier comprises one or more of the following: cookies returned by the buyer demand side platform (50) such as: DSP id, campaign id, visit history, displayed ad id, headers, caching control information, API response content, status code, and other information for identification and tracking returned by the buyer demand side platform designed to be persisted by a web browser, API client, or other connected device.

5. The method of claim 1, wherein the buyer demand side platform is associated with one or more external advertiser tags, and for each of the N impressions, the distribution platform repeats steps d)1] through d)5] for each of the one or more external advertiser tags.

## Patentansprüche

1. Verfahren zur dynamischen Nachverfolgung der Auslieferung und Leistung von digitaler Werbung, die auf nicht-personenbezogenen Vorrichtungen geschaltet wird, das Verfahren umfassend:
a) Empfangen (7) von einer ersten nicht-personenbezogenen elektronischen Anzeige an einem ersten öffentlichen oder halböffentlichen Ort, wobei die erste nicht-personenbezogene elektronische Anzeige keinen Bezug zu einer ersten Person aufweist, durch eine Verteilungsplattform (30), erster elektronischer Werbeabspieldaten, die eine erste Vorrichtungskennung, die mit der ersten nicht-personenbezogenen elektronischen Anzeige verknüpft ist, und einen ersten Zeitstempel umfassen, der mit einer ersten digitalen Werbung verknüpft ist, die während eines ersten Zeitraums auf der ersten nicht-personenbezogenen elektronischen Anzeige an dem ersten öffentlichen oder halböffentlichen Ort angezeigt wurde;
b) Speichern (9) der ersten elektronischen Werbeabspieldaten durch die Verteilungsplattform (30) auf einem ersten nichtflüchtigen, computerlesbaren Speicher, der funktionsmäßig mit der Verteilungsplattform (30) verbunden ist, in einer Impressionsdatenbank, die auf dem ersten nichtflüchtigen, computerlesbaren Speicher gespeichert ist;
c) Bestimmen (11) einer ersten Anzahl N von Impressionen durch die Verteilungsplattform (30), die mit einer geschätzten Anzahl von Personen verknüpft ist, die die erste digitale Werbung während des ersten Zeitraums an dem ersten öffentlichen oder halböffentlichen Ort angesehen haben,
wobei die Bestimmung der ersten Anzahl N von virtuellen Impressionen durch die folgenden Schritte erfolgt, umfassend:
1] Zugreifen auf eine Geolokalisierungsdatenbank, die Geolokalisierungsdaten umfasst, anhand derer die geschätzte Anzahl der Zuschauer an einem bestimmten Ort zu einer bestimmten Tageszeit an einem bestimmten Wochentag als Impressionsmultiplikator ermittelt wird; und
2] Abgleichen der Spieldaten mit dem Impressionsmultiplikator, um die erste Anzahl N zu ermitteln;
oder
1] Verwenden von Sensoren zur Schätzung der Anzahl der Zuschauer, die zu einem bestimmten Zeitpunkt von einer bestimmten Vorrichtung erreicht werden, als Impressionsmultiplikator; und
2] Abgleichen der Spieldaten mit dem Impressionsmultiplikator, um die erste Anzahl N zu ermitteln;
d) Für jede der N Impressionen, Durchführen der folgenden Schritte durch die Verteilungsplattform (30):
1] Abrufen (13) eines Impressionspixeltags, das von einer Demand-Side-Plattform des Käufers (50) stammt und mit der ersten digitalen Werbung verknüpft ist, durch die Verteilungsplattform (30) aus einem nichtflüchtigen, computerlesbaren Speicher, der funktionsmäßig mit der Verteilungsplattform (30) verknüpft ist;
2] Erzeugen einer virtuellen Sitzung durch die Verteilungsplattform (30), die durch eine eindeutige Sitzungskennung, UID, identifiziert wird, die mit der Impression verknüpft ist;
3] Verknüpfen von Informationen mit der virtuellen Sitzung durch die Verteilungsplattform (30), wobei die Informationen es der Verteilungsplattform (30) ermöglichen, einen Webbrowser oder eine mobile Vorrichtung zu emulieren, wobei das Emulieren eines Webbrowsers oder einer mobilen Vorrichtung die digitale Übertragung einer Proxy-Anfrage einschließlich Nachverfolgungsinformationen an die Demand-Side-Plattform des Käufers (50) umfasst;
4] Senden eines Impressionspixelaufrufs, der die mit der virtuellen Sitzung verknüpften Informationen enthält, durch die Verteilungsplattform (30) an die Demand-Side-Plattform des Käufers (50);
5] Empfangen (15) einer Impressionskennung durch die Verteilungsplattform (30) von der Demand-Side-Plattform des Käufers (50) als Reaktion darauf, dass die Demand-Side-Plattform des Käufers (50) den Impressionspixelaufruf empfangen hat, wobei diese Kennung dazu dient, eine Vorrichtung bei zukünftigen Aufrufen zu erkennen, die dem empfangenen Impressionspixelaufruf entsprechen; und
6] Speichern (17) der empfangenen Impressionkennung durch die Verteilungsplattform (30) in Zuordnung zur UID, die mit der virtuellen Sitzung verknüpft ist;
e) Empfangen (19) eines ersten elektronischen Ereignisses an der Verteilungsplattform (30) von einer ersten personenbezogenen Vorrichtung, die mit der ersten Person verknüpft ist, die auf die Werbung reagiert, wobei Schritt e) mindestens einen der folgenden Schritte umfasst:
1] Empfangen des ersten elektronischen Ereignisses über eine Weiterleitung von einer benutzerdefinierten URL, bevor die personenbezogene Vorrichtung an eine Werbe-URL weitergeleitet wird;
2] Empfangen des ersten elektronischen Ereignisses von einem Kommunikationsdienst, das anzeigt, dass ein Anruf an eine mit der Werbung verknüpfte Telefonnummer zur Anrufachverfolgung getätigt wurde;
3] Empfangen des ersten elektronischen Ereignisses von einem Kommunikationsdienst, das den Empfang durch eine SMS bestätigt, die an eine Nummer gesendet wurde, die mit der ersten elektronischen Werbung verknüpft ist;
4] Empfangen des ersten elektronischen Ereignisses von einem Kommunikationsdienst, das anzeigt, dass ein Social-Media-Beitrag mit einem eindeutigen Hashtag oder einer anderen Kennzeichnung erstellt wurde, der mit der ersten elektronischen Werbung verknüpft ist;
5] Empfangen des ersten elektronischen Ereignisses von einem Computersystem, das anzeigt, dass eine E-Mail an einer eindeutigen, festgelegten E-Mail-Adresse eingegangen ist, die mit der ersten elektronischen Werbung verknüpft ist;
6] Empfangen des ersten elektronischen Ereignisses von einem Computersystem, das den Empfang eines eindeutigen Gutscheincodes anzeigt, der mit der ersten elektronischen Werbung verknüpft ist;
7] Empfangen des ersten elektronischen Ereignisses von einem Computersystem, das den Empfang eines eindeutigen QR-Codes anzeigt, der mit der ersten elektronischen Werbung verknüpft ist;
f) Zuordnen des ersten elektronischen Ereignisses mit einer ersten Impression durch die Verteilungsplattform (30) für die Demand-Side-Plattform des Käufers (50) durch Ausführung der folgenden Schritte, umfassend:
1] Abrufen eines Ereignispixeltags, das von der Demand-Side-Plattform des Käufers (50) stammt und mit dem ersten elektronischen Ereignis verknüpft ist, durch die Verteilungsplattform (30) aus einem nichtflüchtigen, computerlesbaren Speicher, der funktionsmäßig mit der Verteilungsplattform (30) verknüpft ist;
2] Abgleich (21) des ersten elektronischen Ereignisses mit der ersten digitalen Werbung durch Vergleich eines oder mehrerer von Folgendem:
i) Dem ersten elektronischen Ereignis mit einer Identifikationscodefolge, die mit der ersten digitalen Werbung verknüpft ist;
ii) Zeitpunkt des ersten elektronischen Ereignisses mit dem ersten Zeitstempel, der mit der ersten digitalen Werbung verknüpft ist;
iii) Ort der ersten personenbezogenen Vorrichtung zum Zeitpunkt des ersten elektronischen Ereignisses am ersten öffentlichen oder halböffentlichen Ort, an dem sich die erste nicht-personenbezogene elektronische Anzeige befindet;
iv) Eigenschaften des ersten elektronischen Ereignisses und zuvor aufgezeichneten Impressionen unter Verwendung von statistischer Modellierung;
3] Verknüpfen des passenden ersten elektronischen Ereignisses mit der ersten Impression durch die Vertriebsplattform (30);
4] Abrufen einer entsprechenden UID und einer virtuellen Sitzung durch die Verteilungsplattform (30) aus einem nichtflüchtigen, computerlesbaren Speicher, der funktionsmäßig mit der Verteilungsplattform (30) verbunden ist; und
5] Übertragen einer Proxy-Anfrage durch die Verteilungsplattform (30) an die Demand-Side-Plattform des Käufers (50), wobei diese Proxy-Anfrage das Ereignispixeltag und die entsprechenden gespeicherten Informationen im Zusammenhang mit der virtuellen Sitzung sowie etwaige zuvor von der Demand-Side-Plattform des Käufers (50) empfangene Impressionsidentifikationsdaten einschließt, um das erste elektronische Ereignis zur Messung der Kampagnenleistung zu erfassen.

2. Verfahren nach Anspruch 1, wobei die Sensoren mit einem oder mehreren von Folgendem verknüpft sind: Netzwerkverkehr, Kameras, Audio und Druck.

3. Verfahren nach Anspruch 1, wobei in Schritt d)3] die mit der virtuellen Sitzung verknüpften Informationen eines oder mehrere von Folgendem umfassen: eine virtuelle Vorrichtungs-ID, einen virtuellen Benutzeragenten, einen virtuellen Ort, eine virtuelle IP-Adresse, virtuelle Anmeldedaten (gemeinsame Geheimnisse, Identifikatoren, Hashes, Benutzernamen/Passwörter, PKI-Anmeldedaten).

4. Verfahren nach Anspruch 1, wobei in Schritt d)4] die Impressionskennung eines oder mehreres von Folgendem umfasst: von der Demand-Side-Plattform des Käufers (50) zurückgesendete Cookies, wie beispielsweise: DSP-ID, Kampagnen-ID, Besuchsverlauf, ID der angezeigten Anzeige, Header, Informationen zur Cache-Steuerung, Inhalt der API-Antwort, Statuscode sowie weitere Informationen zur Identifizierung und Nachverfolgung, die von der Demand-Side-Plattform des Käufers zurückgegeben werden und dazu bestimmt sind, von einem Webbrowser, einem API-Client oder einer anderen verbundenen Vorrichtung dauerhaft gespeichert zu werden.

5. Verfahren nach Anspruch 1, wobei die Demand-Side-Plattform des Käufers mit einem oder mehreren externen Werbetagtags verknüpft ist und die Verteilungsplattform für jede der N Impressionen die Schritte d)l] bis d)5] für jedes der einen oder mehreren externen Werbetagtags wiederholt.

## Revendications

1. Procédé permettant de suivre de manière dynamique la diffusion et les performances de publicités numériques placées sur des dispositifs non personnels, le procédé comprenant :
a) la réception (7), à partir d'un premier écran électronique non personnel à un premier emplacement public ou semi-public, le premier écran électronique non personnel n'ayant pas d'association avec un premier individu par une plateforme de distribution (30), des premières données de lecture de publicités électroniques comprenant un premier identificateur de dispositif associé au premier écran électronique non personnel et un premier horodatage associé à une première publicité numérique affichée pendant une première période sur le premier écran électronique non personnel à l'emplacement public ou semi-public ;
b) le stockage (9), par la plateforme de distribution (30) sur une première mémoire non volatile lisible par ordinateur connectée de manière opérationnelle à la plateforme de distribution (30), des premières données de lecture de publicités électroniques dans une base de données d'impressions stockée sur la première mémoire non volatile lisible par ordinateur ;
c) la détermination (11), par la plateforme de distribution (30), d'un premier nombre N d'impressions associées à un nombre d'individus estimés avoir visionné la première publicité numérique pendant la première période à l'emplacement public ou semi-public,
dans lequel la détermination du premier nombre N d'impressions virtuelles est réalisée par les étapes comprenant :
1] l'accès à une base de données de géolocalisation comprenant des données de géolocalisation qui identifient un nombre estimé de visionneurs pour un emplacement spécifié à un moment précis de la journée et pour un jour précis de la semaine en tant que multiplicateur d'impressions ; et
2] la mise en correspondance des premières données de lecture de publicités avec le multiplicateur d'impressions pour identifier le premier nombre N ;
ou
1] l'utilisation de capteurs pour estimer le nombre de visionneurs exposés par un dispositif spécifique à un moment donné en tant que multiplicateur d'impressions ; et
2] la mise en correspondance des premières données de lecture de publicités avec le multiplicateur d'impressions pour identifier le premier nombre N ;
d) pour chacune des N impressions, la réalisation par la plateforme de distribution (30) des étapes suivantes :
1] l'obtention (13), par la plateforme de distribution (30), à partir d'une mémoire non volatile lisible par ordinateur connectée de manière opérationnelle à la plateforme de distribution (30), d'une balise de pixel d'impression telle qu'obtenue à partir d'une plateforme côté demande acheteur (50) associée à la première publicité numérique ;
2] la génération, par la plateforme de distribution (30), d'une session virtuelle identifiée par un identificateur de session unique, UID, associé à l'impression ;
3] l'association, par la plateforme de distribution (30), d'informations à la session virtuelle, dans lequel les informations permettent à la plateforme de distribution (30) d'émuler un navigateur web ou un dispositif mobile, dans lequel l'émulation d'un navigateur web ou d'un dispositif mobile comprend la transmission numérique d'une requête proxy comportant des informations de suivi vers la plateforme côté demande acheteur (50) ;
4] l'envoi, par la plateforme de distribution (30) à la plateforme côté demande acheteur (50), d'un appel de pixel d'impression contenant les informations associées à la session virtuelle ;
5] la réception (15), par la plateforme de distribution (30), à partir de la plateforme côté demande acheteur (50) en réponse à la plateforme côté demande acheteur (50) recevant l'appel de pixel d'impression, d'un identificateur d'impression pour reconnaître un dispositif lors d'appels futurs correspondant à l'appel de pixel d'impression reçu ; et
6] le stockage (17), par la plateforme de distribution (30), de l'identificateur d'impression reçu par rapport à l'UID tel qu'associé à la session virtuelle ;
e) la réception (19), au niveau de la plateforme de distribution (30), à partir d'un premier dispositif personnel associé au premier individu répondant à la publicité, d'un premier événement électronique,
dans lequel l'étape e) comprend au moins l'une parmi les étapes suivantes :
1] la réception du premier événement électronique par le biais d'une redirection à partir d'une URL personnalisée avant que le dispositif personnel ne soit envoyé à une URL d'annonceur ;
2] la réception du premier événement électronique à partir d'un service de communication indiquant qu'un appel téléphonique a été passé vers un numéro de téléphone de suivi d'appel associé à la publicité ;
3] la réception du premier événement électronique à partir d'un service de communication indiquant la réception d'un SMS envoyé à un numéro associé à la première publicité électronique ;
4] la réception du premier événement électronique à partir d'un service de communication indiquant qu'une publication sur les réseaux sociaux avec un mot-dièse unique ou une autre étiquette d'identification a été réalisée, associée à la première publicité électronique ;
5] la réception du premier événement électronique à partir d'un système informatique indiquant qu'un e-mail a été reçu à une adresse e-mail désignée unique, associée à la première publicité électronique ;
6] la réception du premier événement électronique à partir d'un système informatique indiquant la réception d'un code promotionnel unique associé à la première publicité électronique ;
7] la réception du premier événement électronique à partir d'un système informatique indiquant la réception d'un code QR unique associé à la première publicité électronique ;
f) l'attribution, par la plateforme de distribution (30) pour la plateforme côté demande acheteur (50), du premier événement électronique à une première impression en réalisant les étapes comprenant :
1] l'obtention, par la plateforme de distribution (30) à partir d'une mémoire non volatile lisible par ordinateur connectée de manière opérationnelle à la plateforme de distribution (30), d'une balise de pixel d'événement telle qu'obtenue à partir de la plateforme côté demande acheteur (50) associée au premier événement électronique ;
2] la mise en correspondance (21) du premier événement électronique avec la première publicité numérique en comparant un ou plusieurs parmi les éléments suivants :
i) le premier événement électronique avec une chaîne de code d'identification associée à la première publicité numérique ;
ii) l'heure du premier événement électronique avec le premier horodatage associé à la première publicité numérique ;
iii) l'emplacement du premier dispositif personnel au moment du premier événement électronique avec le premier emplacement public ou semi-public du premier écran électronique non personnel ;
iv) les caractéristiques du premier événement électronique et les impressions précédemment enregistrées à l'aide d'une modélisation statistique ;
3] l'association, par la plateforme de distribution (30), du premier événement électronique mis en correspondance avec la première impression ;
4] l'obtention, par la plateforme de distribution (30), à partir d'une mémoire non volatile lisible par ordinateur connectée de manière opérationnelle à la plateforme de distribution (30), d'un UID et d'une session virtuelle correspondants ; et
5] la transmission, par la plateforme de distribution (30), d'une requête proxy comportant la balise de pixel d'événement et les informations stockées correspondantes associées à la session virtuelle, et comportant toute information d'identificateur d'impression précédemment reçue à partir de la plateforme côté demande acheteur (50), à la plateforme côté demande acheteur (50) pour enregistrer le premier événement électronique permettant de mesurer les performances de campagne.

2. Procédé selon la revendication 1, dans lequel les capteurs sont associés à un ou plusieurs parmi les éléments suivants : un trafic réseau, des caméras, l'audio et une pression.

3. Procédé selon la revendication 1, dans lequel dans l'étape d)3], les informations associées à la session virtuelle comprennent un ou plusieurs parmi les éléments suivants : un ID de périphérique virtuel, un agent utilisateur virtuel, un emplacement virtuel, une adresse IP virtuelle, des informations d'identification virtuelles (secrets partagés, identificateurs, hachages, noms d'utilisateur/mots de passe, informations d'identification PKI).

4. Procédé selon la revendication 1, dans lequel dans l'étape d)4], l'identificateur d'impression comprend un ou plusieurs parmi les éléments suivants : des cookies renvoyés par la plateforme côté demande acheteur (50) tels que : un ID de DSP, un ID de campagne, un historique des visites, un ID de publicité affichée, des en-têtes, des informations de contrôle de mise en cache, un contenu de réponse API, un code d'état, et d'autres informations pour l'identification et le suivi renvoyées par la plateforme côté demande acheteur conçues pour être conservées par un navigateur web, un client API ou un autre dispositif connecté.

5. Procédé selon la revendication 1, dans lequel la plateforme côté demande acheteur est associée à une ou plusieurs balises d'annonceurs externes, et pour chacune des N impressions, la plateforme de distribution répète les étapes d)l] à d)5] pour chacune de la ou des balises d'annonceurs externes.
